# EUROPEAN PATENT APPLICATION

(11) **EP 4 741 759 A1**
(43) Date of publication of application: **13.05.2026**
(21) Application number: 24836378.0
(22) Date of filing: 05.07.2024
(51) Int. Cl.: G01B 9/0209, G01B 9/02, G01B 11/24, G01B 11/06, G06T 7/50

(54) **SLIDING-TYPE WHITE LIGHT INTERFEROMETER**

(30) Priority: 06.07.2023 KR 20230087638; 21.05.2024 KR 20240066058
(71) Applicant: Park Systems Corp., Yeongtong-gu Suwon-si, Gyeonggi-do 16229 (KR)
(72) Inventor: JO, Ahjin, Seoul 06204 (KR); AHN, Byoung-Woon, Anyang-si Gyeonggi-do 14045 (KR); KIM, Hyuntae, Suwon-si Gyeonggi-do 16240 (KR)
(74) Representative: Müller Schupfner & Partner Patent- und Rechtsanwaltspartnerschaft mbB (Muc)
(86) International application number: PCT/KR2024/009584
(87) International publication number: WO 2025/009931

(57) **Abstract**

Disclosed is a sliding-type white light interferometer configured to continuously photograph an interference pattern through a scanning assembly which is inclined at a predetermined angle with respect to a sample, thereby acquiring the shape of the sample at a more improved speed. The sliding-type white light interferometer includes a light source, a stage, a mirror, a beam splitter, a stage moving assembly, a CCD image sensor, and an image analysis processor. The beam splitter makes a path change such that the path of white light provided to the sample has a predetermined angle with the sample. The stage moving assembly moves the stage in the X-axis direction in which the sample is scanned while the path of white light maintains at a predetermined angle with the sample. The CCD image sensor continuously photographs an interference pattern generated by measured light reflected from the surface of the sample and reflected light reflected from the mirror while the stage is moved in the X-axis direction, thereby generating a plurality of interference pattern images.

## Description

### Technical Field

The present invention relates to a sliding-type white light interferometer, and more particularly, to a sliding-type white light interferometer in which interference fringes are continuously photographed through a scanning assembly inclined at a predetermined angle with respect to a sample to acquire the shape of the sample.

### Background Art

In recent fields of nanoscience, semiconductors, nanophysics, nanochemistry, nanomaterials, nanooptics, surface science, medical imaging, biology, biophysics, medical physics, or biomedical optics, there is a growing demand to measure three-dimensional shape information of samples with a three-dimensional nanostructures or micrometer structures.

A white light interferometry that uses interference phenomenon of white light has been used to measure the three-dimensional shape information of the sample.

A general white light interferometry uses a beam splitter that separates a white light source and generates a path toward the sample and the mirror, respectively. The white light irradiated to the sample and the mirror, respectively by the beam splitter is reflected and then recombined and transmitted to the CCD (charge-coupled device) image sensor, which photographs interference fringe images by the combined light reflected from the sample and the mirror, respectively. The image analysis processor analyzes the interference fringe image photographed by the CCD image sensor to generate 3D shape information of the sample.

At this time, the sample is placed on the stage, and the stage is moved along the path axis (generally the Z-axis) of the light source by a separate driving assembly to generate a path difference between the sample side and the mirror side. The interference fringe image photographed by the CCD image sensor forms different interference fringe images according to a change in the path difference between the sample side and the mirror side, and the image analysis processor generates three-dimensional shape information of the sample based on the interference fringes from which the different interference fringe images are accumulated.

Meanwhile, a conventional white light interferometer uses a so-called vertical scanning interferometry in which an interference fringe is acquired according to a change in the Z-axis distance between a stage on which a sample is placed and an optical system such as the beam splitter and the CCD image sensor as described above. In the vertical scanning interferometry, Z-axis distance between a stage and an optical system is changed at a specific position on the sample to acquire interference fringe of one frame, the sample or the optical system is shifted to an X-axis by a certain distance, and then the Z-axis distance between the stage and the optical system is changed again to acquire an interference fringe of another adjacent frame, and then the acquired plural interference fringes are accumulated or stitched to scan the sample.

However, the above-described vertical scanning interferometry has a problem in that it takes a long time to scan the shape of the sample because it requires acquiring an interference fringe by changing the Z-axis distance between the stage and the optical system at each specific location, and then acquiring an interference fringe by changing the Z-axis distance between the stage and the optical system after the sample or the optical system moves along the X-axis.

### Disclosure of Invention

### Technical Problem

An object of the present invention for solving the above-described problems is to provide a sliding-type white light interferometer in which interference fringes are continuously photographed through a scanning assembly inclined at a predetermined angle with respect to a sample to acquire the shape of the sample at a further improved speed.

### Solution to Problem

In order to achieve the above object, a sliding-type white light interferometer according to an embodiment of the present invention includes a light source providing white light; a stage on which a sample is placed; a mirror having a reflective surface; a beam splitter which splits a path of white light provided from the light source into the sample side and the mirror side; a stage moving assembly which moves the stage; a CCD (Charge Coupled Device) image sensor by receiving from the beam splitter the measured light reflected from the sample and reflected light reflected from the mirror, photographing an interference fringe generated by the measured light and the reflected light to generate a plurality of interference fringe images while the stage moving assembly moves the stage; and an image analysis processor for generating a white light interference fringe (WLI fringe) by accumulating the plurality of interference fringe images, wherein the beam splitter makes a path change such that the path of white light provided to the sample side has a predetermined angle with the sample side, thereby the white light is irradiated to the sample to have the predetermined angle, the stage moving assembly moves the stage in X-axis direction in which the sample is scanned while the path of white light remains at the predetermined angle with the sample, and the CCD image sensor continuously photographs an interference fringe generated by measured light reflected from the surface of the sample and reflected light reflected from the mirror while the stage is moved in the X-axis direction, thereby generating a plurality of interference fringe images.

The stage moving assembly, when moving the stage in the X-axis direction, moves the stage toward the beam splitter in the Z-axis direction, thereby changing the interference fringe during continuous photographing of the interference fringe.

The image analysis processor, when accumulating the plurality of interference fringe images, aligns the plurality of interference fringe images to the same X-position of each of the interference fringe images to generate a cumulative white light interference fringe.

The stage moving assembly, when moving the stage in the X-axis direction, reciprocates the stage in the Z-axis and the -Z-axis directions to change the interference fringe during continuous photographing of the interference fringe.

It is characterized in that the stage moving assembly, when moving the stage in the Z-axis direction, moves the stage by a predetermined length, and the predetermined length is 60 to 80 nm.

The sliding-type white light interferometer according to the present invention, comprises a plurality of the CCD image sensors which photograph different frames of the sample, each of the plurality of CCD image sensors generates an interference fringe image based on measurement light reflected from different specific surfaces of the sample.

To achieve the above-described object, a sliding-type white light interferometry (WLI) according to an embodiment of the present invention, in which is configured to continuously photograph an interference fringe through a scanning assembly which is inclined at a predetermined angle with respect to a sample, to acquire the shape of the sample, wherein the interference fringe is generated by measurement light reflected from the sample and reflection light reflected from a mirror, the scanning assembly comprising: a light source providing white light; the mirror having a reflection surface; a beam splitter which splits the path of the white light provided by the light source into the sample side and the mirror side; and a CCD (Charge Coupled Device) image sensor which receives from the beam splitter measurement light reflected from the sample and reflected light reflected from the mirror and photographs an interference fringe generated by the measurement light and the reflected light; wherein the white light interferometry further comprises, an optical moving assembly which moves the scanning assembly; and an image analysis processor which accumulates a plurality of interference fringes photographed by the CCD image sensor while the optical moving assembly moves the scanning assembly to generate a white light interference fringe (WLI Fringe), wherein the beam splitter makes a path change such that the path of white light provided to the sample has a predetermined angle with the sample, thereby the white light is irradiated to the sample to have the predetermined angle, the optical moving assembly moves the scanning assembly in X-axis direction in which the sample is scanned while the path of white light remains at the predetermined angle with the sample, and the CCD image sensor continuously photographs an interference fringe generated by measured light reflected from the surface of the sample and reflected light reflected from the mirror while the scanning assembly moves in the X-axis direction, thereby generating a plurality of interference fringe images.

The optical moving assembly, when moving the scanning assembly in the X-axis direction, moves the scanning assembly toward the sample in the Z-axis direction, thereby changing the interference fringe during continuous photographing of the interference fringe.

The image analysis processor, when accumulating the plurality of interference fringe images, aligns the plurality of interference fringe images to the same X-position of each of the interference fringe images to generate a cumulative white light interference fringe.

The optical moving assembly, when moving the scanning assembly in the X-axis direction, reciprocates the scanning assembly in the Z-axis and the -Z-axis directions to change the interference fringe during continuous photographing of the interference fringe.

It is characterized in that the optical moving assembly, when moving the scanning assembly in the Z-axis direction, moves the scanning assembly by a predetermined length, and the predetermined length is 60 to 80 nm.

The sliding-type white light interferometer according to the present invention comprises a plurality of the CCD image sensors which photograph different frames of the surface of the sample, each of the plurality of CCD image sensors generating an interference fringe image based on measurement light reflected from different specific surfaces of the sample.

To achieve the above-described object, a sliding-type white light interferometry (WLI) according to an embodiment of the present invention in which is configured to continuously photograph an interference fringe through a scanning assembly which is inclined at a predetermined angle with respect to a sample, to acquire the shape of the sample, wherein the interference fringe is generated by measurement light reflected from the sample and reflection light reflected from a mirror, the scanning assembly comprising: a light source providing white light; a stage on which the sample is placed; the mirror having a reflection surface; a beam splitter which splits the path of the white light provided by the light source into the sample side and the mirror side; and a CCD (Charge Coupled Device) image sensor which receives from the beam splitter measurement light reflected from the sample and reflected light reflected from the mirror and photographs an interference fringe generated by the measurement light and the reflected light; wherein the white light interferometry further comprises, a stage moving assembly which moves the stage in the X-axis direction in which the sample is scanned; an optical moving assembly which moves the scanning assembly toward the sample in the Z-axis direction; and an image analysis processor which accumulates a plurality of interference fringes photographed by the CCD image sensor while the stage moving assembly moves the stage in the X-axis direction and the optical moving assembly moves the scanning assembly in the Z-axis direction to generate a white light interference fringe (WLI Fringe), wherein the beam splitter makes a path change such that the path of white light provided to the sample has a predetermined angle with the sample, thereby the white light is irradiated to the sample to have the predetermined angle, the stage moving assembly moves the stage in X-axis direction while the path of white light remains at the predetermined angle with the sample, and the CCD image sensor continuously photographs an interference fringe generated by measured light reflected from the surface of the sample and reflected light reflected from the mirror while the stage is moved in the X-axis direction, thereby generating a plurality of interference fringe images.

The optical moving assembly, when the stage moving assembly moves the stage in the X-axis direction, moves the scanning assembly in the Z-axis, thereby changing the interference fringe during continuous photographing of the interference fringe.

The image analysis processor, when accumulating the plurality of interference fringe images, aligns the plurality of interference fringe images to the same X-position of each of the interference fringe images to generate a cumulative white light interference fringe.

The optical moving assembly, when the stage moving assembly moves the stage in the X-axis direction, reciprocates the scanning assembly in the Z-axis and the -Z-axis directions to change the interference fringe during continuous photographing of the interference fringe.

It is characterized in that the optical moving assembly, when moving the scanning assembly in the Z-axis direction, moves the scanning assembly by a predetermined length, and the predetermined length is 60 to 80 nm.

The sliding-type white light interferometer, according to an embodiment of the present invention, comprises a plurality of the CCD image sensors which photograph different frames of the surface of the sample, each of the plurality of CCD image sensors generating an interference fringe image based on measurement light reflected from different specific surfaces of the sample.

### Advantageous Effects of Invention

According to the sliding-type white light interferometer of the present invention, the shape of the sample can be acquired at a further improved speed by continuously photographing an interference fringe through a scanning assembly inclined at a predetermined angle with respect to the sample.

### Brief Description of Drawings

FIG. 1 is a diagram illustrating an embodiment of a sliding-type white light interferometer according to the present invention.
FIG. 2 is a diagram illustrating another embodiment of a sliding-type white light interferometer according to the present invention.
FIG. 3 is a view illustrating a conventional vertical scanning interferometry and a sliding-type white light interferometry according to the present invention.
FIG. 4 is a view showing the actual scanning of the surface of a sample using a conventional vertical scanning interferometry and a sliding-type white light interferometry according to the present invention.
FIG. 5 is a view illustrating a state in which a surface of a sample is scanned without a movement of a scanning assembly or the sample along the Z-axis in a sliding-type white light interferometry according to the present invention.
FIG. 6 is a view illustrating a state in which the surface of a sample is scanned with moving the scanning assembly or the sample along the Z-axis in a sliding-type white light interferometry according to the present invention.
FIG. 7 is a view showing a state in which a sample surface with more subtle movement of the scanning assembly or the sample along the Z-axis in a sliding-type white light interferometry according to the present invention.
FIG. 8 is a view schematically illustrating a conventional WLI measurement method and a conventional PSI measurement method.
FIG. 9 is a view schematically illustrating a state in which an image analysis processor is generating an accumulated white light interference fringe, according to the present invention.
FIG. 10 is a view illustrating a state in which an image analysis processor is accumulating an interference fringe image that actually scans a surface of a sample to generate a accumulated white light interference fringe, according to the present invention.

### Best Mode for Carrying out the Invention

Hereinafter, some embodiments of the present invention will be described in detail with reference to exemplary drawings. In assigning reference numbers to the components of each drawing, it should be noted that the same components are made to have the same sign as much as possible, even if they are displayed on different drawings.

Further, in describing the embodiment of the present invention, a detailed description of known constructions or functions is omitted if it is determined that the detailed description of known constructions or functions hinders understanding of the embodiment of the present invention.

In addition, in describing the components of the embodiments of the present invention, terms such as first, second, A, B, (a), (b), and the like may be used. These terms are used only to distinguish a component from other components, and the nature, sequence, or order of the component is not limited by the terms.

In the present specification, the singular type also includes the plural type unless otherwise specified in the phrase. The "includes" and/or "including" used in the specification does not exclude the presence or addition of one or more other components other than the mentioned components.

Hereinafter, the present invention will be described in more detail with reference to the accompanying drawings.

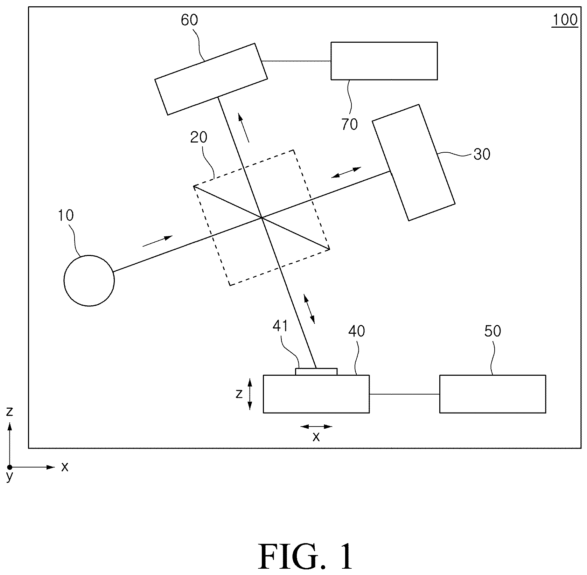

FIG. 1 is a diagram illustrating an embodiment of a sliding-type white light interferometer 100 according to the present invention.

The sliding-type white light interferometer 100 (hereinafter, referred to as a "white light interferometer 100") according to the present invention includes a light source 10, a beam splitter 20, a mirror 30, a stage 40, a stage moving assembly 50, a CCD image sensor 60, and an image analysis processor 70, with reference to FIG. 1. With the beam splitter 20 at the center, separate lenses (not shown) may be further included on the light source 10, the sample 41, the mirror 30, and the CCD image sensor 60 sides, respectively, for focusing and controlling the path of white light, measurement light, and reflected light.

The white light interferometer 100 according to the present invention continuously photographs the interference fringe generated by the measurement light reflected from the sample 41 and the reflected light reflected from the mirror 30 through a scanning assembly 80 inclined at a predetermined angle with respect to the sample 41 to measure the shape information of the sample 41, specifically the surface height of the sample 41. Here, the scanning assembly 80 includes a light source 10, a beam splitter 20, a mirror 30, and a CCD image sensor 60.

The light source 10 generates white light. The light source 10 may be a halogen lamp that generates white light or a white LED. The light source 10 provides white light to the beam splitter 20, and the beam splitter 20 splits the white light provided from the light source 10 and provides it to the sample 41 and the mirror 30.

The sample 41 is placed on the upper surface of the stage 40. Sample 41 is a measurement object to be measured for surface information. The sample 41 may be a nanostructure such as a semiconductor device.

The stage moving assembly 50 moves the stage 40. The stage moving assembly 50 moves the stage 40 in the X-axis direction, in which the sample 41 is scanned or to be scanned, in a state in which a predetermined angle between the path of white light provided from the beam splitter 20 to the sample 41 side is maintained.

The mirror 30 has a reflective surface on one surface facing the beam splitter 20.

The beam splitter 20 splits the path of white light provided from the light source 10 into a sample 41 side and a mirror 30 side. The beam splitter 20 provides a portion of the white light provided from the light source 10 to the stage 40 side.

The beam splitter 20 provides the mirror 30 with the rest of the white light provided from the light source 10. The white light provided to the mirror 30 is reflected and transmitted back to the beam splitter 20. The beam splitter 20 changes the path of the reflected light so that the reflected light reflected from the mirror 30 is transmitted to the CCD image sensor 60.

The beam splitter 20 splits white light into a sample 41 side and a reflective surface side of the mirror 30. The measurement light reflected from the sample 41 and the reflected light reflected from the mirror 30 are transmitted to the CCD image sensor 60 by the beam splitter 20. The CCD image sensor 60 receives an interference fringe caused by a change in the path difference of the measurement light reflected from the sample 41 and the reflection light reflected from the mirror 30.

The beam splitter 20 changes the path of the white light so that some of the white light provided from the light source 10 is transmitted to the stage 40 side and the sample 41 side. The beam splitter 20 changes the path of the white light so that the path of the white light provided to the sample 41 side has a predetermined angle with the sample 41 side. The white light is irradiated to the sample 41 to have a predetermined angle. Accordingly, the optical axis irradiated to the sample 41 is tilted at a predetermined angle.

The beam splitter 20 may be inclined to maintain a predetermined angle with the surface of the sample 41. The white light transmitted toward the sample 41 side is reflected back to the beam splitter 20 as measurement light and is transmitted to the CCD image sensor 60 past the beam splitter 20.

The CCD image sensor (60, Charge Coupled Device image sensor) receives measurement light reflected from a sample 41 and reflected light reflected from a mirror 30 from a beam splitter 20. The CCD image sensor 60 receives measurement light and reflected light from the beam splitter 20 while the stage moving assembly 50 moves the stage 40. The CCD image sensor 60 photographs the interference fringe generated by the measurement light and the reflected light. The CCD image sensor 60 continuously photographs interference fringes while the stage moving assembly 50 moves the stage 40 in the X-axis direction, thereby generating a plurality of interference fringe images.

The CCD image sensor 60 continuously photographs interference fringes of pixels generated by measurement light and reflected light while a stage 40 is moved by a stage moving assembly 50. The CCD image sensor 60 continuously photographs interference fringes to generate a plurality of interference fringe images. Here, the pixel means a unit pixel included in the XY plane of the interference fringe image.

The CCD image sensor 60 transmits a plurality of continuously photographed interference fringe images to the image analysis processor 70.

The image analysis processor 70 accumulates a plurality of interference fringe images received from the CCD image sensor 60 to generate a white light interference fringe (WLI Fringe). The image analysis processor 70 analyzes the generated white light interference fringe (WLI Fringe) to measure the surface shape of the sample 41, specifically, the height of the sample (41). The white light interferometer 100 measures the surface shape using light reflected from the sample 41, and thus has the advantage of being able to measure quickly without damaging the sample 41.

In summary, in the white light interferometer 100 according to an embodiment of the present invention, white light irradiated toward the sample 41 by an optical system inclined to have a predetermined angle with the sample 41 has a predetermined angle by the beam splitter 20. The white light is irradiated onto the sample 41, the measurement light reflected after being irradiated onto the sample 41 and the reflected light reflected from the reflecting surface of the mirror 30 are transmitted to the CCD image sensor 60 by the beam splitter 20, and the CCD image sensor 60 photographs the interference fringe generated by the measurement light and the reflection light. When white light is irradiated onto the sample 41, the stage 40 is moved by the stage moving assembly 50 in the X-axis direction in which the sample 41 is scanned or to be scanned, and a CCD image sensor 60 continuously photographs interference fringes generated by the surface of the sample 41 moved by the stage moving assembly 50 to generate a plurality of interference fringe images.

Here, the stage moving assembly 50 may move the stage 40 in the Z-axis direction so as to be close to or away from the beam splitter 20 while moving the stage 40 in the X-axis direction. The stage moving assembly 50 moves the stage 40 in the Z-axis direction while maintaining a predetermined angle with the path axis of white light provided from the beam splitter 20 to the stage 40. The stage moving assembly 50 may move the stage 40 in the Z-axis direction based on a slight Z-step size (e.g., 68.75 nm, which is λ/8). As the stage 40 is moved in the Z-axis direction by the stage moving assembly 50, a slight path difference between the measured light and the reflected light transmitted to the CCD image sensor 60 occurs, and the slight path difference causes a change in the interference fringe when continuously photographing the interference fringe.

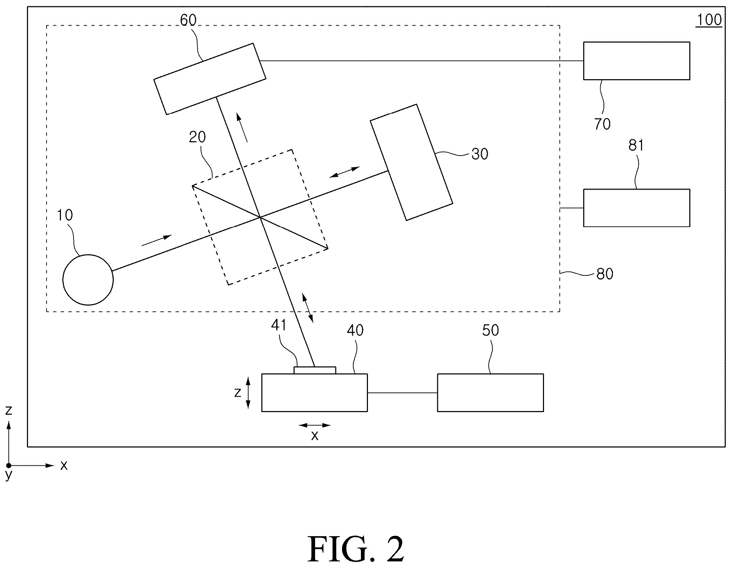

FIG. 2 is a diagram illustrating another embodiment of a sliding-type white light interferometer 100 according to the present invention.

Referring to FIG. 2, another embodiment of the sliding-type white light interferometer 100 according to the present invention may further include an optical moving assembly 81 for moving the scanning assembly 80.

The optical moving assembly 81 may move the scanning assembly 80 in the X-axis direction in which the sample 41 is being scanned or scanned while the white light is irradiated to the sample 41 at a predetermined angle. The optical moving assembly 81 moves the scanning assembly 80 in the X-axis direction while maintaining a predetermined angle of white light irradiated to the sample 41. When the optical moving assembly 81 moves in the X-axis direction, the CCD image sensor 60 receives from the beam splitter 20 the measurement light reflected from the sample 41 and the reflection light reflected from the mirror 30 and continuously photographs the received measurement light and the interference fringes produced by the reflection light to generate a plurality of interference fringe images.

Here, the optical moving assembly 81 may move the scanning assembly 80 in the X-axis direction and simultaneously move the scanning assembly 80 in the Z-axis direction toward the sample 41.

The optical moving assembly 81 moves the scanning assembly 80 in the Z-axis direction while maintaining a predetermined angle of white light provided from the beam splitter 20 to the stage 40. The optical moving assembly 81 may move the scanning assembly 80 in the Z-axis direction based on a slight Z-step size (e.g., 68.75 nm, which is λ/8). As the scanning assembly 80 is moved in the Z-axis direction by the optical moving assembly 81, a slight path difference between the measured light and the reflected light transmitted to the CCD image sensor 60 occurs, and the slight path difference causes a change in the interference fringe when continuously photographing the interference fringe.

As another embodiment of the sliding-type white light interferometer 100 according to the present invention, a stage 40 on which a sample 41 is placed during a continuous measurement of interference fringes according to measurement light and reflected light may be moved in the X-axis direction by a stage moving assembly 50, and an optical moving assembly 81 may move the scanning assembly 80 in the Z-axis direction together with the movement of the stage 40 in the X-axis direction. As described above, when the stage 40 of the stage moving assembly 50 moves and the scanning assembly 80 of the optical moving assembly 81 moves, the predetermined angle between the white light and the sample 41 is maintained the same.

The scanning assembly 80 may be inclined at the predetermined angle with respect to the sample by the optical moving assembly 81. Alternatively, the stage 40 may be inclined by the predetermined angle by the stage moving assembly 50. The optical moving assembly 81 provides Z-axis directional movement of the scanning assembly 80. The stage moving assembly 50 provides an X-axis direction movement of the stage 40. When the stage moving assembly 50 moves the stage 40 in the X-axis direction, the optical moving assembly 81 may tilt only the lens disposed between the beam splitter 20 and the sample 41 side by a predetermined angle.

The scanning assembly 80 may be inclined at the predetermined angle with respect to the sample 41, or the stage 40 may be inclined at the predetermined angle with respect to the scanning assembly 80. At this time, a direction in which the scanning assembly 80 or the stage 40 is inclined may be inclined in the X-axis direction as illustrated in FIGS. 1 and 2, but is not limited thereto and may be inclined in the Y-axis direction or may be inclined in the XY plane.

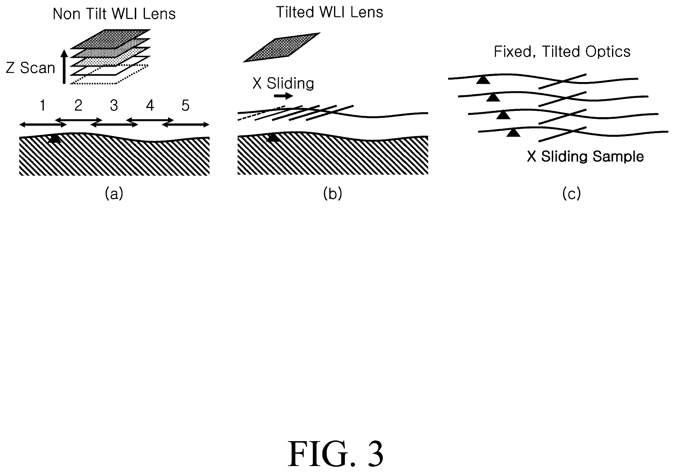

FIG. 3 is a view illustrating a conventional vertical scanning interferometry and a sliding-type white light interferometry according to the present invention. Specifically, (a) of FIG. 3 is a view illustrating a conventional vertical scanning interferometry, (b) of FIG. 3 is a view illustrating a scanning assembly 80 sliding in an X-axis direction in a state inclined with respect to a sample 41 in a sliding-type white light interferometry according to the present invention, and (c) of FIG. 3 is a view illustrating a state in which the scanning assembly 80 is inclined with respect to the sample 41 and the sample 41 is sliding in the X-axis direction in the sliding-type white light interferometry according to the present invention.

Referring to (a) of FIG. 3, in the conventional vertical scanning interferometry, the scanning assembly 80 is positioned in the first area and then Z-axis moves to photograph the interference fringes of the first area, and accumulates the interference fringes of the first area to generate an interference fringe image, thereby scanning the first area. After the scanning assembly 80 completes scanning of the first area, the scanning assembly 80 scans the second area by moving to the second area along the X-axis and then moving in the Z-axis. In the conventional vertical scanning interferometry, multiple areas (for example, areas 1 to 5 shown in (a) of FIG. 3) are scanned, and then the images generated by the scanning are stitched together to scan the surface of the sample 41. Therefore, the conventional vertical scanning interferometry had a problem of taking a long scanning time.

To quickly measure a large area of the sample 41, rather than accumulating and then stitching images respectively taken at various positions, as shown in (b) of FIG. 3 and (c) of FIG. 3, the scanning assembly 80 slides over upper area of the sample 41 in a state where the scanning assembly 80 is inclined at a predetermined angle between the scanning assembly 80 and the sample 41, or the sample 41 slides to continuously photograph interference fringes while the sample 41 slides, and the interference fringe image generated by the photographing is accumulated or stitched to reduce the scanning time of the shape of the sample 41.

In summary, the conventional WLI measurement requires using Review method that the WLI Lens 60 move to the measurement position to measure the sample 41 with the Z Scan, and in order to measure the entire area of the sample 41, the XY stage 40 moves after the WLI measurement at the measurement position to measure the WLI at another measurement position, and then each WLI measurement image must be connected in the Image Stitching method, so the measurement takes a long time.

The present invention is directed to solving these drawbacks, wherein the XY stage 40 is moved in the scanning direction of the sample while the WLI Lens 60 is tilted, and continuous measurement of the WLI is possible with the movement of the XY stage 40, thereby exhibiting the effect of shortening the WLI measurement time.

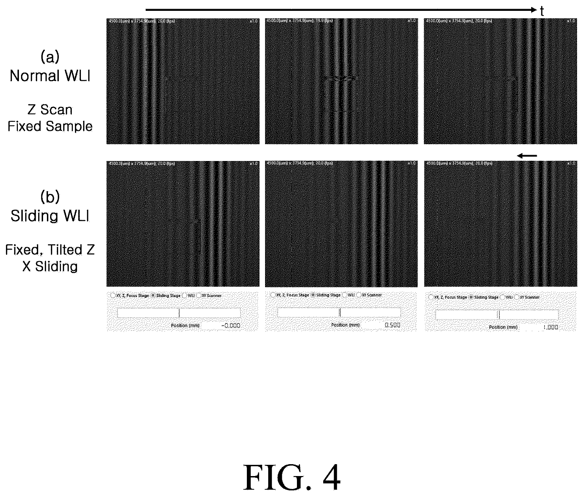

FIG. 4 a view showing the actual scanning of the surface of the sample 41 using a conventional vertical scanning interferometry and a sliding-type white light interferometry according to the present invention.

Specifically, (a) of FIG. 4 is a view showing a process of scanning the surface of the sample 41 by a conventional vertical scanning interferometry, and (b) of FIG. 4 is a view showing a process of scanning the surface of the sample 41 through a sliding-type white light interferometry according to the present invention. In the scanning in FIG. 4, the scanning assembly 80 and the stage 40 were moved to 200 µm/s while measuring the Normal WLI and the Sliding WLI, respectively, to photograph the WLI Vision. (FOV 4500×3754 µm in ×2.5 WLI Lens, Tilt 7 µm in the entire image).

Comparing each frame of (a) and (b) of FIG. 4, it may be seen that scanning of the sample 41 according to the sliding-type white light interferometry of the present invention is faster than the scanning time of the sample 41 of the conventional vertical scanning interferometry.

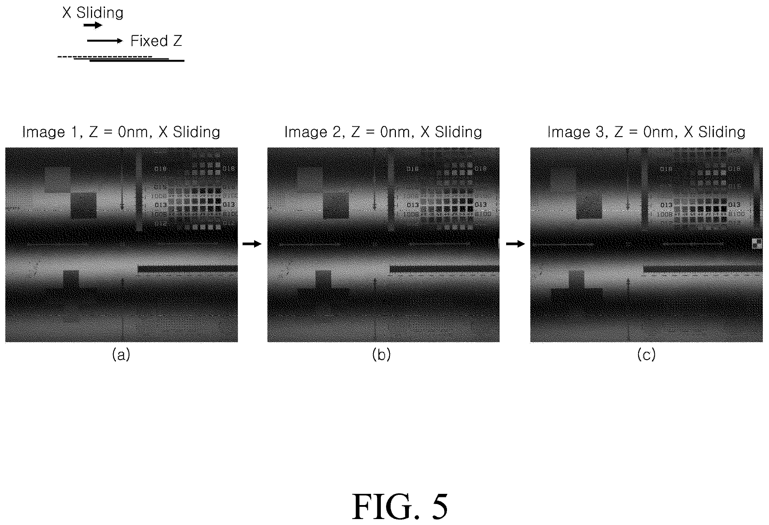

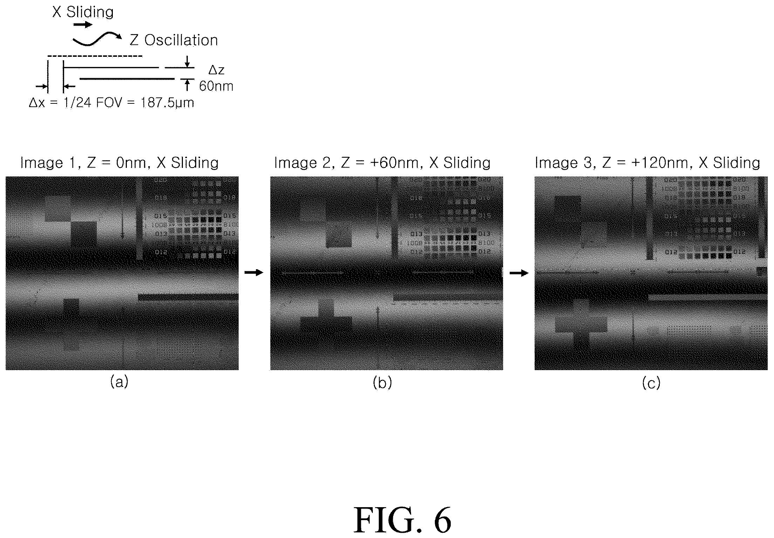

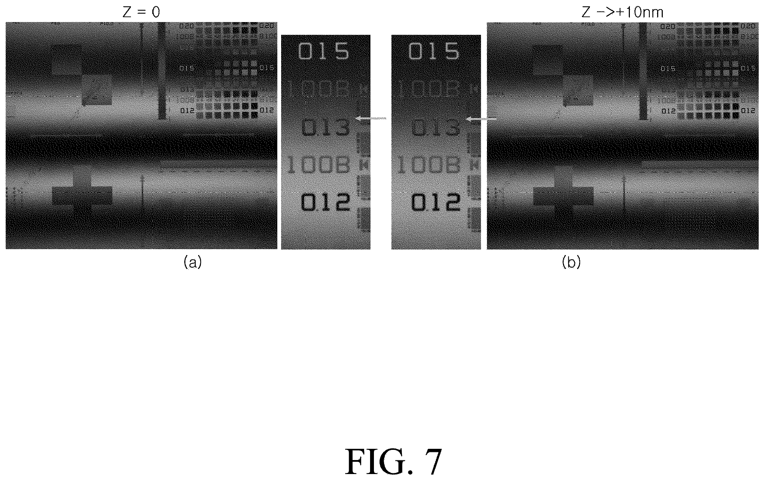

FIG. 5 is a view showing a state in which the surface of the sample 41 is scanned without a Z-axis movement of a scanning assembly 80 or sample 41 in the sliding-type white light interferometry according to the present invention, and FIG. 6 is a view showing a state in which the surface of the sample 41 is scanned together with a Z-axis movement of the scanning assembly 80 or sample 41 in the sliding-type white light interferometry according to the present invention. In (a) to (c) of FIG. 5 and (a) to (c) of FIG. 6 are shown in time-series arranged frames. FIG. 7 is a view showing a scanning of the surface of the sample 41 together with a slighter Z-axis movement of the scanning assembly 80 or the sample 41 in a sliding-type white light interferometry according to the present invention.

As shown in FIG. 5, while the scanning assembly 80 or the sample 41 is inclined at the predetermined angle in the Y-axis direction, the scanning assembly 80 or the sample 41 is slid in the X-axis direction to generate an interference fringe image. Referring to FIG. 5, when the scanning assembly 80 or the sample 41 is inclined at the predetermined angle in the Y-axis direction and the scanning assembly 80 or the sample 41 is slid in the X-axis direction to generate the interference fringe image, it can be seen that the position of the Fringe in each frame is similarly maintained. When the positions of the Fringes are kept similar, it is difficult to measure the exact height of the surface of the sample 41 with the Intensity (strength) in the Fringes. When the scanning assembly 80 or the sample 41 is tilted at the predetermined angle in the Y-axis direction and the scanning assembly 80 or the sample 41 is slid in the X-axis direction to generate an interference fringe image, the Defect or the like on the surface of the sample 41 can be indirectly measured using the naked eye, etc.

However, as illustrated in FIG. 6, in a state in which the scanning assembly 80 or the sample 41 is inclined at a predetermined angle in the Y-axis direction, when the scanning assembly 80 or the sample 41 is slid in the X-axis direction and the scanning assembly 80 or the sample 41 is moved in the Z-axis direction toward each other to generate an interference fringe image, it can be seen that the interference fringe is changed for each frame. In FIG. 6, the scanning assembly 80 or the sample 41 is slid in the X-axis direction, and the scanning assembly 80 or the sample 41 is moved in the Z direction by 60 nm for each frame. Therefore, in the white light interferometer 100 according to the present invention, as the scanning assembly 80 or the sample 41 is slid in the X-axis direction and the scanning assembly 80 or the sample 41 is moved toward each other in the Z-axis direction, each interference fringe changes for each frame, and the white light interference fringe generated by accumulating each frame can be interpreted by the conventional PSI method. For example, the Intensity at the location of the same sample 41 may be analyzed as a phase shift interferometer (PSI) or a white light phase shifting interferometer (WLPSI) (white light phase shift interferometer). Known PSI, WLI, and WLPSI analysis algorithms may be preset in the image analysis processor 70.

PSI is a method of measuring height by using a short wavelength laser as a light source 10, scanning in the Z-axis direction, and observing changes in interference signals. PSI generally changes the phase value using a piezoelectric actuator, and the intensity of three or four lights is obtained in one period to restore the phase and measure the height. The PSI can calculate the height of the surface of the sample 41 by using the restored phase, and when the wavelength in the visible light region is used as the light source 10, it is characterized by excellent height resolution. However, the restored phase is different from the actual phase because it is obtained as a value between -π and π. Since the order of the interference fringe cannot be obtained in PSI, only the relative height difference between the measurement data can be measured, and phase ambiguity exists. PSI has a very excellent measurement resolution in the height direction as sub-nm, but has a disadvantage in that it cannot measure a step of 1/4 or more of the wavelength of the light source 10 used due to phase ambiguity. Therefore, PSI can measure only a smooth surface or only the surface shape of the sample 41 having a step of 1/4 or less.

WLI is intended to overcome the disadvantages of PSI. The WLI uses a halogen lamp or a white LED containing all various wavelengths rather than a short wavelength laser as the light source 10. Since white light includes all of various wavelengths, the interference signal obtained by WLI may be expressed as the sum of the aforementioned PSIs. The white light interference signal differs from the short wavelength interference signal, and the interference signal appears only in a short range within 2 µm. This causes constructive interference of all short-wavelength interference signals at positions where the phases of all short-wavelength interference signals become zero, the interference fringe appears largest at a distance where the optical path difference (OPD) becomes zero, and the size of the interference fringe decreases as the optical path difference increases. Therefore, WLI measures the surface shape by finding the vertex of the visibility function calculated by calculating the size of the interference fringe. WLI using the visibility function increases the measurement range to infinity, but it has a disadvantage that the measurement resolution is tens of nm, which is lower than that of PSI.

WLPSI is a combination of PSI and WLI. WLPSI is a method that uses white light as a light source 10 and applies an analysis algorithm used for PSI to ensure excellent measurement resolution of sub-nm without limiting the measurement range. Since WLPSI uses white light with a short interference distance, determine the order of interference fringes using the visibility function, and then restore the phase using the PSI method. After that, it measures the surface shape of the sample 41 by adding the order of the interference fringe to the restored phase.

Referring to FIG. 7, it may be seen that even when the scanning assembly 80 or the sample 41 moves 10 nm in the Z-axis direction, the position of the interference fringe changes. In particular, it can be seen that the upper part of the 0.13 characters of FIG. 7 has changed in WLI Intensity.

The scanning assembly 80 or the sample 41 according to the present invention may be moved toward each other in the Z-axis direction by the optical moving assembly 81 or the stage moving assembly 50, respectively. The optical moving assembly 81 or the stage moving assembly 50 may reciprocate the scanning assembly 80 or the sample 41 in the Z-axis and the -Z-axis directions when the scanning assembly 80 or the sample 41 is moved in the X-axis direction, respectively. When the optical moving assembly 81 or the stage moving assembly 50 moves the scanning assembly 80 or the sample 41 in the Z-axis direction, it may be moved by a predetermined distance, in which each predetermined movement distance (Z-step) may be 60 to 80 nm, preferably 68.75 nm, which is λ/8.

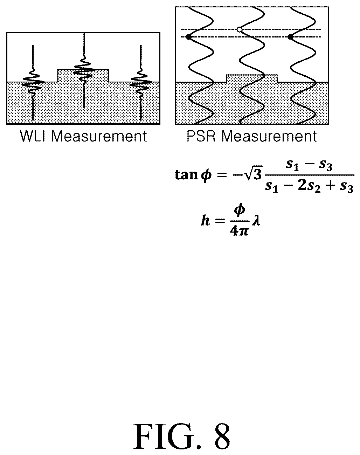

FIG. 8 is a diagram schematically illustrating a conventional WLI measurement method and a conventional PSI measurement method.

Referring to FIG. 8, the conventional WLI measurement has a characteristic that even a sample 41 having a high step may be measured. However, the conventional WLI measurement has a disadvantage in that a large number of image frames is required due to the narrow Z Step size in a large area.

On the other hand, PSI measurement has the advantage of requiring only 4 to 7 image frames, but it is difficult to measure a step of 150 nm or more. The feature that is difficult to measure, such a step of 150 nm or more, is solved by measuring while moving the Z Step to a 68.75 nm interval.

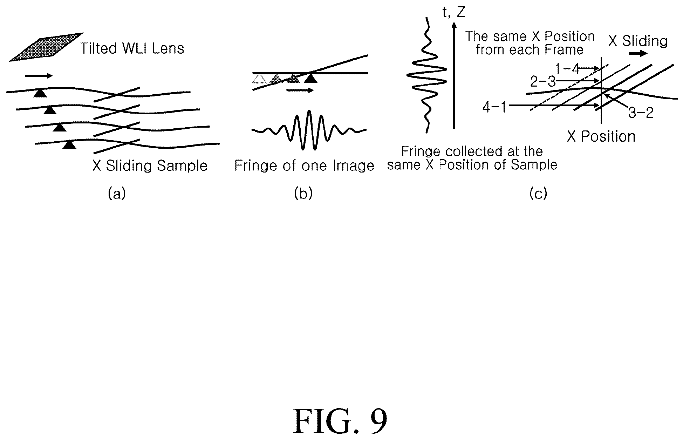

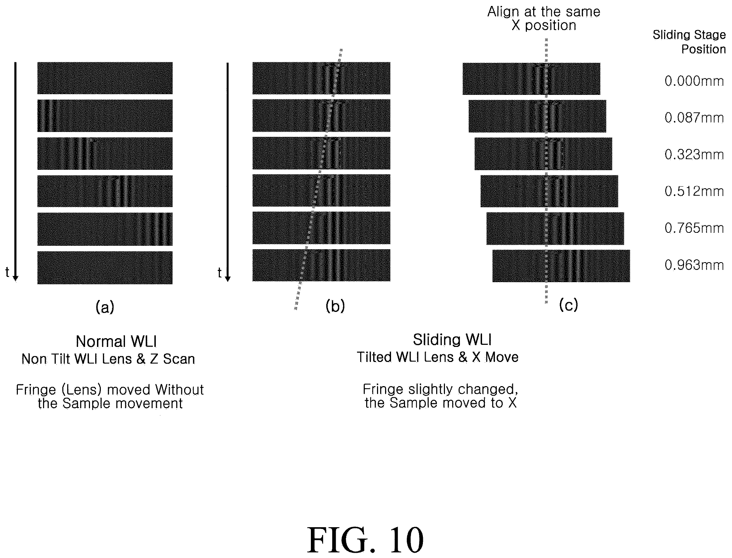

FIG. 9 is a view schematically illustrating a state in which the image analysis processor 70 is generating an accumulated white light interference fringe, according to the present invention, and FIG. 10 is a view illustrating a state in which the image analysis processor 70 is accumulating an interference fringe image that actually scans the surface of the sample 41 to generate a accumulated white light interference fringe, according to the present invention. Specifically, (a) of FIG. 10 is a view showing a plurality of white light interference fringes in the conventional white light interferometer 100, (b) of FIG. 10 is a view showing a plurality of white light interference fringes generated by the white light interferometer 100 according to the present invention, and (c) of FIG. 10 is a view showing an actually scanned and accumulated image of an interference fringe of the surface of a sample 41 by the image analysis processor 70 according to the present invention.

The white light interferometer 100, according to the present invention, includes a Sliding stage 40 for measuring AFP. The stage 40, according to the present invention, may maintain flatness at a level of 10 ppm while moving in the X-axis direction from 10 µm/s to several mm/s.

As described above, the white light interferometer 100, according to the present invention, moves together in the Z-axis direction when the sample 41 or the scanning assembly 80 moves in the X-axis direction, and changes the interference fringe. When the data Pixel corresponding to the same X position is collected according to the X-axis direction movement speed of the sample 41 or the scanning assembly 80, it may be confirmed that a fringe, such as a general WLI, may be created.

Referring to FIGS. 9 and 10, the image analysis processor 70 according to the present invention, when accumulating a plurality of interference fringe images, aligns the plurality of interference fringe images to the same X-position of each of the interference fringe images to generate an accumulated white light interference fringe.

It can be seen that the scanning assembly 80 or the sample 41 is moved in the Z-axis direction together with the movement of the scanning assembly 80 or the sample 41 in the X-axis direction with the scanning assembly 80 tilted by a predetermined angle, so that the interference fringe is changed for each frame, and also the shape of the sample 41 is moved in the X-axis direction, from the plurality of white light interference fringes produced by the white light interferometer 100 according to the present invention show.

The image analysis processor 70 according to the present invention aligns and accumulates the interference fringe images shown in (b) of FIG. 10 based on the same x position as shown in (c) of FIG. 10, thereby generating an accumulated white light interference fringe. The image analysis processor 70 may acquire the shape of the sample 41 by analyzing the accumulated white light interference fringe aligned and accumulated as shown in (c) of FIG. 10.

The white light interferometer 100 according to the present invention may increase the Pixel size to 10 µm, increase the number of CCD image sensors 60, or further shorten the measurement time by increasing of the frame rate of the CCD image sensor 60.

For example, the white light interferometer 100 according to the present invention may include a plurality of scanning assemblies 80. Each of a plurality of scanning assemblies 80 may include a light source 10, a beam splitter 20, a mirror 30, and a CCD image sensor 60. Accordingly, the white light interferometer 100 according to the present invention may include a plurality of CCD image sensors 60.

The plurality of CCD image sensors 60 according to the present invention may include a plurality of CCD image sensors 60 which photographs different frames of the sample 41, as shown in (c) of FIG. 3. A plurality of CCD image sensors 60 each generate an interference fringe image based on measurement light reflected from different specific surfaces of the sample 41. A plurality of CCD image sensors 60 are installed to photograph different frames and can generate interference fringe images based on measurement light reflected from different specific surfaces, respectively, according to the movement of the scanning assembly 80 or sample 41. Accordingly, the white light interferometer 100 according to the present invention may further shorten the measurement time by increasing the number of CCD image sensors 60.

The white light interferometer 100 according to the present invention may measure the Top Surface Flatness of the entire Wafer with a resolution of 3.65 µm.

The scope of protection of the present invention is not limited to the description and expression of the embodiments explicitly described above. Furthermore, it should be noted that the scope of protection of the present invention may not be limited by obvious modifications or substitutions within the technical field to which the present invention pertains.

## Claims

1. A sliding-type white light interferometer comprising:
a light source providing white light;
a stage on which a sample is placed;
a mirror having a reflective surface;
a beam splitter which splits a path of white light provided from the light source into the sample side and the mirror side;
a stage moving assembly which moves the stage;
a CCD (Charge Coupled Device) image sensor by receiving from the beam splitter the measured light reflected from the surface of the sample and reflected light reflected from the mirror, photographing an interference fringe generated by the measured light and reflected light to generate a plurality of interference fringe images while the stage moving assembly moves the stage; and
an image analysis processor for generating a white light interference fringe (WLI fringe) by accumulating the plurality of interference fringe images,
wherein the beam splitter makes a path change such that the path of white light provided to the sample has a predetermined angle with the sample, thereby the white light is irradiated to the sample to have the predetermined angle,
the stage moving assembly moves the stage in X-axis direction in which the sample is scanned while the path of white light remains at the predetermined angle with the sample, and
the CCD image sensor continuously photographs an interference fringe generated by measured light reflected from the surface of the sample and reflected light reflected from the mirror while the stage is moved in the X-axis direction, thereby generating a plurality of interference fringe images.

2. The sliding-type white light interferometer according to claim 1, the stage moving assembly, when moving the stage in the X-axis direction, moves the stage toward the beam splitter in the Z-axis direction, thereby changing the interference fringe during continuous photographing of the interference fringe.

3. The sliding-type white light interferometer according to claim 2, **characterized in that** the image analysis processor, when accumulating the plurality of interference fringe images, aligns the plurality of interference fringe images to the same X-position of each of the interference fringe images to generate a cumulative white light interference fringe.

4. The sliding-type white light interferometer according to claim 2, the stage moving assembly, when moving the stage in the X-axis direction, reciprocates the stage in the Z-axis and the -Z-axis directions to change the interference fringe during continuous photographing of the interference fringe.

5. The sliding-type white light interferometer according to claim 2, **characterized in that** the stage moving assembly, when moving the stage in the Z-axis direction, moves the stage by a predetermined length, and the predetermined length is 60 to 80 nm.

6. The sliding-type white light interferometer according to claim 1, comprising a plurality of the CCD image sensors which photograph different frames of the sample, each of the plurality of CCD image sensors generating an interference fringe image based on measurement light reflected from different specific surfaces of the sample.

7. A sliding-type white light interferometry (WLI) in which is configured to continuously photograph an interference fringe through a scanning assembly which is inclined at a predetermined angle with respect to a sample, to acquire the shape of the sample, wherein the interference fringe is generated by measurement light reflected from the sample and reflection light reflected from a mirror, the scanning assembly comprising:
a light source providing white light;
the mirror having a reflection surface;
a beam splitter which splits the path of the white light provided by the light source into the sample side and the mirror side; and
a CCD (Charge Coupled Device) image sensor which receives from the beam splitter measurement light reflected from the sample and reflected light reflected from the mirror and photographs an interference fringe generated by the measurement light and the reflected light;
wherein the white light interferometry further comprises,
an optical moving assembly which moves the scanning assembly; and
an image analysis processor which accumulates a plurality of interference fringes photographed by the CCD image sensor while the optical moving assembly moves the scanning assembly to generate a white light interference fringe (WLI Fringe), wherein the beam splitter makes a path change such that the path of white light provided to the sample has a predetermined angle with the sample, thereby the white light is irradiated to the sample to have the predetermined angle,
the optical moving assembly moves the scanning assembly in X-axis direction in which the sample is scanned while the path of white light remains at the predetermined angle with the sample, and
the CCD image sensor continuously photographs an interference fringe generated by measured light reflected from the surface of the sample and reflected light reflected from the mirror while the scanning assembly moves in the X-axis direction, thereby generating a plurality of interference fringe images.

8. The sliding-type white light interferometry according to claim 7, the optical moving assembly, when moving the scanning assembly in the X-axis direction, moves the scanning assembly toward the sample in the Z-axis direction, thereby changing the interference fringe during continuous photographing of the interference fringe.

9. The sliding-type white light interferometry according to claim 8, **characterized in that** the image analysis processor, when accumulating the plurality of interference fringe images, aligns the plurality of interference fringe images to the same X-position of each of the interference fringe images to generate a cumulative white light interference fringe.

10. The sliding-type white light interferometry according to claim 8, the optical moving assembly, when moving the scanning assembly in the X-axis direction, reciprocates the scanning assembly in the Z-axis and the -Z-axis directions to change the interference fringe during continuous photographing of the interference fringe.

11. The sliding-type white light interferometry according to claim 8, **characterized in that**, the optical moving assembly, when moving the scanning assembly in the Z-axis direction, moves the scanning assembly by a predetermined length, and the predetermined length is 60 to 80 nm.

12. The sliding-type white light interferometry according to claim 7, comprising a plurality of the CCD image sensors which photograph different frames of the surface of the sample, each of the plurality of CCD image sensors generating an interference fringe image based on measurement light reflected from different specific surfaces of the sample.

13. A sliding-type white light interferometry (WLI) in which is configured to continuously photograph an interference fringe through a scanning assembly which is inclined at a predetermined angle with respect to a sample, to acquire the shape of the sample, wherein the interference fringe is generated by measurement light reflected from the sample and reflection light reflected from a mirror, the scanning assembly comprising:
a light source providing white light;
a stage on which a sample is placed;
a mirror having a reflection surface;
a beam splitter which splits the path of the white light provided by the light source into the sample side and the mirror side; and
a CCD (Charge Coupled Device) image sensor which receives from the beam splitter measurement light reflected from the sample and reflected light reflected from the mirror and photographs an interference fringe generated by the measurement light and the reflected light;
wherein the white light interferometry further comprises,
a stage moving assembly which moves the stage in the X-axis direction in which the sample is scanned;
an optical moving assembly which moves the scanning assembly toward the sample in the Z-axis direction; and
an image analysis processor which accumulates a plurality of interference fringes photographed by the CCD image sensor while the stage moving assembly moves the stage in the X-axis direction and the optical moving assembly moves the scanning assembly in the Z-axis direction to generate a white light interference fringe (WLI Fringe), wherein the beam splitter makes a path change such that the path of white light provided to the sample has a predetermined angle with the sample, thereby the white light is irradiated to the sample to have the predetermined angle,
the stage moving assembly moves the stage in X-axis direction while the path of white light remains at the predetermined angle with the sample, and
the CCD image sensor continuously photographs an interference fringe generated by measured light reflected from the surface of the sample and reflected light reflected from the mirror while the stage is moved in the X-axis direction, thereby generating a plurality of interference fringe images.

14. The sliding-type white light interferometry according to claim 13, the optical moving assembly, when the stage moving assembly moves the stage in the X-axis direction, moves the scanning assembly in the Z-axis, thereby changing the interference fringe during continuous photographing of the interference fringe.

15. The sliding-type white light interferometry according to claim 14, **characterized in that** the image analysis processor, when accumulating the plurality of interference fringe images, aligns the plurality of interference fringe images to the same X-position of each of the interference fringe images to generate a cumulative white light interference fringe.

16. The sliding-type white light interferometry according to claim 14, the optical moving assembly, when the stage moving assembly moves the stage in the X-axis direction, reciprocates the scanning assembly in the Z-axis and the -Z-axis directions to change the interference fringe during continuous photographing of the interference fringe.

17. The sliding-type white light interferometry according to claim 14, **characterized in that**, the optical moving assembly, when moving the scanning assembly in the Z-axis direction, moves the scanning assembly by a predetermined length, and the predetermined length is 60 to 80 nm.

18. The sliding-type white light interferometry according to claim 13, comprising a plurality of the CCD image sensors which photograph different frames of the surface of the sample, each of the plurality of CCD image sensors generating an interference fringe image based on measurement light reflected from different specific surfaces of the sample.
